# EUROPEAN PATENT APPLICATION

(11) **EP 4 346 307 A1**
(43) Date of publication of application: **03.04.2024**
(21) Application number: 23200031.5
(22) Date of filing: 27.09.2023
(51) Int. Cl.: H04W 72/21, H04W 28/02

(54) **DELAY STATUS REPORT (DSR) FORMAT FOR XR SERVICE APPLICATION**

(30) Priority: 29.09.2022 US 202263377551 P; 13.09.2023 US 202318367502
(71) Applicant: MediaTek Inc., 30078 Hsinchu City (TW)
(72) Inventor: CHENG, Ming-Yuan, 30078 Hsinchu City (TW); JOSE, Pradeep, Cambourne, Cambridge, CB23 6DW (GB); HSU, Chia-Chun, 30078 Hsinchu City (TW); HO, Sheng-Yi, 30078 Hsinchu City (TW)
(74) Representative: Hoefer & Partner Patentanwälte mbB

(57) **Abstract**

In an aspect of the disclosure, a method, a computer-readable medium, and an apparatus are provided. The apparatus may be a UE. In certain configurations, the UE establishes a connection supporting an extended reality (XR) application service with a base station. The UE reports, to the base station, a delay status report (DSR) to indicate a buffer size for data to be transmitted to the base station. The DSR includes timing information. The UE receives a configuration instruction from the base station. The UE configures resources on the UE according to the configuration instruction to transmit the data to the base station.

## Description

### BACKGROUND

### Field

The present disclosure relates generally to communication systems, and more particularly, to techniques of methods and apparatuses about schemes to have a delay status report (DSR) format for extended reality (XR) service application.

### Background

The statements in this section merely provide background information related to the present disclosure and may not constitute prior art.

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may be a UE. In certain configurations, the UE establishes a connection supporting an XR application service with a base station. The UE reports, to the base station, a delay status report (DSR) to indicate a buffer size for data to be transmitted to the base station. The DSR includes timing information. The UE receives a configuration instruction from the base station. The UE configures resources on the UE according to the configuration instruction to transmit the data to the base station.

In another aspect of the disclosure, a method, a computer-readable medium, and an apparatus are provided. The apparatus may be a base station. In certain configurations, the base station enters a connection supporting an XR application service with a UE. The base station receives, from the UE, a DSR to indicate a buffer size of the UE for data to be received from the UE. The DSR includes timing information. The base station generates a configuration instruction for configuring resources on the UE according to the DSR and the timing information. The base station sends the configuration instruction to the UE.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2 is a diagram illustrating a base station in communication with a UE in an access network.
FIG. 3 illustrates an example logical architecture of a distributed access network.
FIG. 4 illustrates an example physical architecture of a distributed access network.
FIG. 5 is a diagram showing an example of a DL-centric slot.
FIG. 6 is a diagram showing an example of an UL-centric slot.
FIG. 7 is a diagram illustrating an example procedure between a UE and a base station.
FIG. 8 is a diagram showing a legacy BSR table.
FIG. 9 is a diagram showing a quantized error between the actual buffer size of the UE and the BS value awared by the base station.
FIG. 10 is a diagram showing example DSR formats with timing information.
FIG. 11 is a diagram showing an example DSR format with remaining PDB information.
FIG. 12 is a diagram showing an example PDB table.
FIG. 13 is a flow chart of a method (process) for wireless communication of a UE.
FIG. 14 is a flow chart of a method (process) for wireless communication of a base station.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

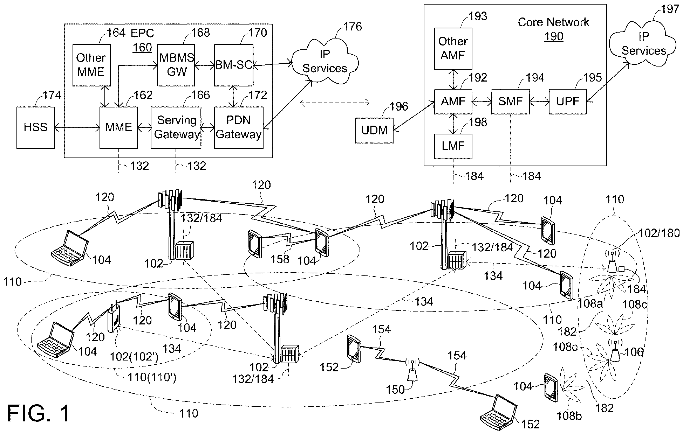

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., SI interface). The base stations 102 configured for 5G NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter cell interference coordination, connection setup and release, load balancing, distribution for nonaccess stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102/UEs 104 may use spectrum up to 7 MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152/AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band (e.g., 3 GHz - 300 GHz) has extremely high path loss and a short range. The mmW base station 180 may utilize beamforming 182 with the UE 104 to compensate for the extremely high path loss and short range.

The base station 180 may transmit a beamformed signal to the UE 104 in one or more transmit directions 108a. The UE 104 may receive the beamformed signal from the base station 180 in one or more receive directions 108b. The UE 104 may also transmit a beamformed signal to the base station 180 in one or more transmit directions. The base station 180 may receive the beamformed signal from the UE 104 in one or more receive directions. The base station 180/UE 104 may perform beam training to determine the best receive and transmit directions for each of the base station 180/UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS (packet switch) Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a location management function (LMF) 198, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the SMF 194 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as loT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may reference 5G New Radio (NR), the present disclosure may be applicable to other similar areas, such as LTE, LTE-Advanced (LTE-A), Code Division Multiple Access (CDMA), Global System for Mobile communications (GSM), or other wireless/radio access technologies.

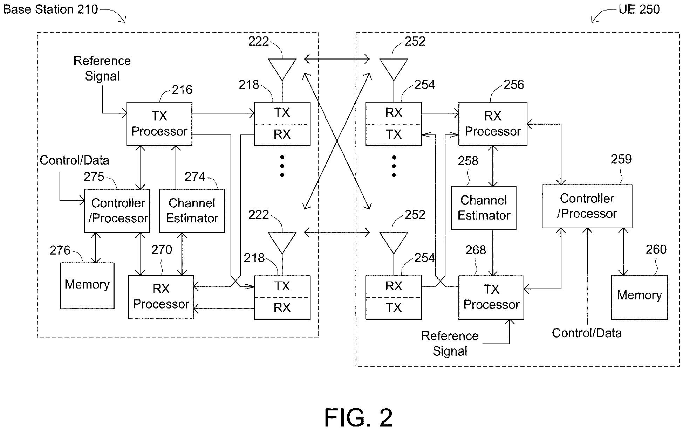

FIG. 2 is a block diagram of a base station 210 in communication with a UE 250 in an access network. In the DL, IP packets from the EPC 160 may be provided to a controller/processor 275. The controller/processor 275 implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer. The controller/processor 275 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 216 and the receive (RX) processor 270 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 216 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 274 may be used to determine the coding and modulation scheme, as well as for spatial processing. The channel estimate may be derived from a reference signal and/or channel condition feedback transmitted by the UE 250. Each spatial stream may then be provided to a different antenna 220 via a separate transmitter 218TX. Each transmitter 218TX may modulate an RF carrier with a respective spatial stream for transmission.

At the UE 250, each receiver 254RX receives a signal through its respective antenna 252. Each receiver 254RX recovers information modulated onto an RF carrier and provides the information to the receive (RX) processor 256. The TX processor 268 and the RX processor 256 implement layer 1 functionality associated with various signal processing functions. The RX processor 256 may perform spatial processing on the information to recover any spatial streams destined for the UE 250. If multiple spatial streams are destined for the UE 250, they may be combined by the RX processor 256 into a single OFDM symbol stream. The RX processor 256 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 210. These soft decisions may be based on channel estimates computed by the channel estimator 258. The soft decisions are then decoded and deinterleaved to recover the data and control signals that were originally transmitted by the base station 210 on the physical channel. The data and control signals are then provided to the controller/processor 259, which implements layer 3 and layer 2 functionality.

The controller/processor 259 can be associated with a memory 260 that stores program codes and data. The memory 260 may be referred to as a computer-readable medium. In the UL, the controller/processor 259 provides demultiplexing between transport and logical channels, packet reassembly, deciphering, header decompression, and control signal processing to recover IP packets from the EPC 160. The controller/processor 259 is also responsible for error detection using an ACK and/or NACK protocol to support HARQ operations.

Similar to the functionality described in connection with the DL transmission by the base station 210, the controller/processor 259 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 258 from a reference signal or feedback transmitted by the base station 210 may be used by the TX processor 268 to select the appropriate coding and modulation schemes, and to facilitate spatial processing. The spatial streams generated by the TX processor 268 may be provided to different antenna 252 via separate transmitters 254TX. Each transmitter 254TX may modulate an RF carrier with a respective spatial stream for transmission. The UL transmission is processed at the base station 210 in a manner similar to that described in connection with the receiver function at the UE 250. Each receiver 218RX receives a signal through its respective antenna 220. Each receiver 218RX recovers information modulated onto an RF carrier and provides the information to a RX processor 270.

The controller/processor 275 can be associated with a memory 276 that stores program codes and data. The memory 276 may be referred to as a computer-readable medium. In the UL, the controller/processor 275 provides demultiplexing between transport and logical channels, packet reassembly, deciphering, header decompression, control signal processing to recover IP packets from the UE 250. IP packets from the controller/processor 275 may be provided to the EPC 160. The controller/processor 275 is also responsible for error detection using an ACK and/or NACK protocol to support HARQ operations.

New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may utilize OFDM with a cyclic prefix (CP) on the uplink and downlink and may include support for half-duplex operation using time division duplexing (TDD). NR may include Enhanced Mobile Broadband (eMBB) service targeting wide bandwidth (e.g. 80 MHz beyond), millimeter wave (mmW) targeting high carrier frequency (e.g. 60 GHz), massive MTC (mMTC) targeting nonbackward compatible MTC techniques, and/or mission critical targeting ultra-reliable low latency communications (URLLC) service.

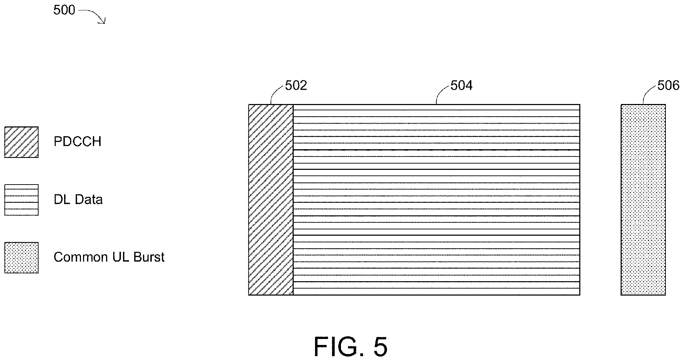

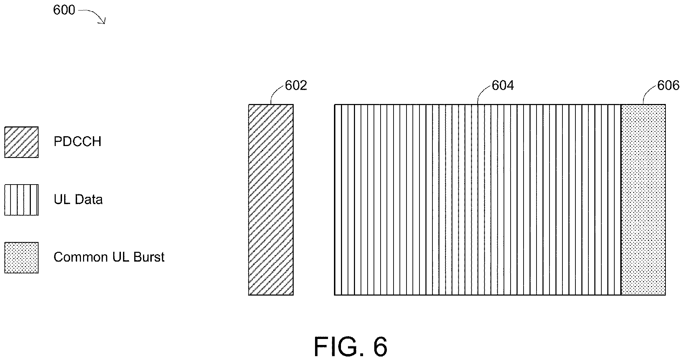

A single component carrier bandwidth of 100 MHz may be supported. In one example, NR resource blocks (RBs) may span 12 sub-carriers with a sub-carrier bandwidth of 60 kHz over a 0.25 ms duration or a bandwidth of 30 kHz over a 0.5 ms duration (similarly, 50MHz BW for 15kHz SCS over a 1 ms duration). Each radio frame may consist of 10 subframes (10, 20, 40 or 80 NR slots) with a length of 10 ms. Each slot may indicate a link direction (i.e., DL or UL) for data transmission and the link direction for each slot may be dynamically switched. Each slot may include DL/UL data as well as DL/UL control data. UL and DL slots for NR may be as described in more detail below with respect to FIGs. 5 and 6.

The NR RAN may include a central unit (CU) and distributed units (DUs). A NR BS (e.g., gNB, 5G Node B, Node B, transmission reception point (TRP), access point (AP)) may correspond to one or multiple BSs. NR cells can be configured as access cells (ACells) or data only cells (DCells). For example, the RAN (e.g., a central unit or distributed unit) can configure the cells. DCells may be cells used for carrier aggregation or dual connectivity and may not be used for initial access, cell selection/reselection, or handover. In some cases DCells may not transmit synchronization signals (SS) in some cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

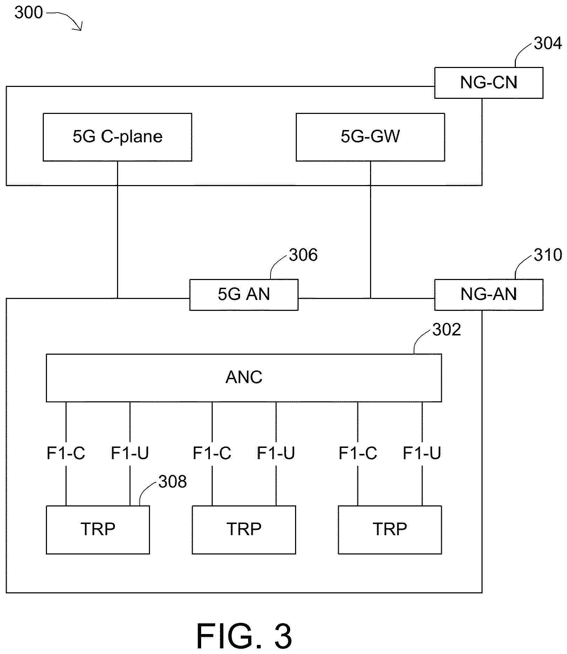

FIG. 3 illustrates an example logical architecture of a distributed RAN 300, according to aspects of the present disclosure. A 5G access node 306 may include an access node controller (ANC) 302. The ANC may be a central unit (CU) of the distributed RAN. The backhaul interface to the next generation core network (NG-CN) 304 may terminate at the ANC. The backhaul interface to neighboring next generation access nodes (NG-ANs) 310 may terminate at the ANC. The ANC may include one or more TRPs 308 (which may also be referred to as BSs, NR BSs, Node Bs, 5G NBs, APs, or some other term). As described above, a TRP may be used interchangeably with "cell."

The TRPs 308 may be a distributed unit (DU). The TRPs may be connected to one ANC (ANC 302) or more than one ANC (not illustrated). For example, for RAN sharing, radio as a service (RaaS), and service specific ANC deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture of the distributed RAN 300 may be used to illustrate fronthaul definition. The architecture may be defined that support fronthauling solutions across different deployment types. For example, the architecture may be based on transmit network capabilities (e.g., bandwidth, latency, and/or jitter). The architecture may share features and/or components with LTE. According to aspects, the next generation AN (NG-AN) 310 may support dual connectivity with NR. The NG-AN may share a common fronthaul for LTE and NR.

The architecture may enable cooperation between and among TRPs 308. For example, cooperation may be preset within a TRP and/or across TRPs via the ANC 302. According to aspects, no inter-TRP interface may be needed/present.

According to aspects, a dynamic configuration of split logical functions may be present within the architecture of the distributed RAN 300. The PDCP, RLC, MAC protocol may be adaptably placed at the ANC or TRP.

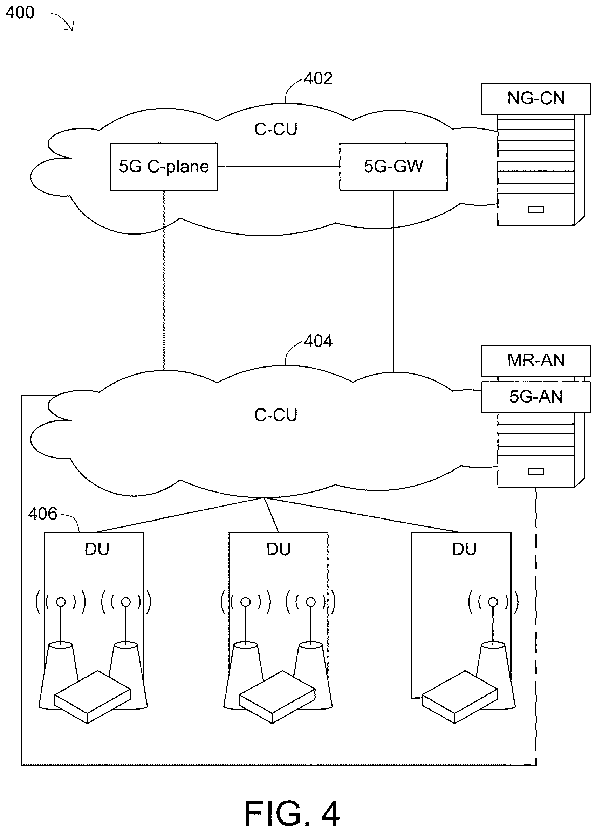

FIG. 4 illustrates an example physical architecture of a distributed RAN 400, according to aspects of the present disclosure. A centralized core network unit (C-CU) 402 may host core network functions. The C-CU may be centrally deployed. C-CU functionality may be offloaded (e.g., to advanced wireless services (AWS)), in an effort to handle peak capacity. A centralized RAN unit (C-RU) 404 may host one or more ANC functions. Optionally, the C-RU may host core network functions locally. The C-RU may have distributed deployment. The C-RU may be closer to the network edge. A distributed unit (DU) 406 may host one or more TRPs. The DU may be located at edges of the network with radio frequency (RF) functionality.

FIG. 5 is a diagram 500 showing an example of a DL-centric slot. The DL-centric slot may include a control portion 502. The control portion 502 may exist in the initial or beginning portion of the DL-centric slot. The control portion 502 may include various scheduling information and/or control information corresponding to various portions of the DL-centric slot. In some configurations, the control portion 502 may be a physical DL control channel (PDCCH), as indicated in FIG. 5. The DL-centric slot may also include a DL data portion 504. The DL data portion 504 may sometimes be referred to as the payload of the DL-centric slot. The DL data portion 504 may include the communication resources utilized to communicate DL data from the scheduling entity (e.g., UE or BS) to the subordinate entity (e.g., UE). In some configurations, the DL data portion 504 may be a physical DL shared channel (PDSCH).

The DL-centric slot may also include a common UL portion 506. The common UL portion 506 may sometimes be referred to as an UL burst, a common UL burst, and/or various other suitable terms. The common UL portion 506 may include feedback information corresponding to various other portions of the DL-centric slot. For example, the common UL portion 506 may include feedback information corresponding to the control portion 502. Non-limiting examples of feedback information may include an ACK signal, a NACK signal, a HARQ indicator, and/or various other suitable types of information. The common UL portion 506 may include additional or alternative information, such as information pertaining to random access channel (RACH) procedures, scheduling requests (SRs), and various other suitable types of information.

As illustrated in FIG. 5, the end of the DL data portion 504 may be separated in time from the beginning of the common UL portion 506. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric slot and alternative structures having similar features may exist without necessarily deviating from the aspects described herein.

FIG. 6 is a diagram 600 showing an example of an UL-centric slot. The UL-centric slot may include a control portion 602. The control portion 602 may exist in the initial or beginning portion of the UL-centric slot. The control portion 602 in FIG. 6 may be similar to the control portion 502 described above with reference to FIG. 5. The UL-centric slot may also include an UL data portion 604. The UL data portion 604 may sometimes be referred to as the pay load of the UL-centric slot. The UL portion may refer to the communication resources utilized to communicate UL data from the subordinate entity (e.g., UE) to the scheduling entity (e.g., UE or BS). In some configurations, the control portion 602 may be a physical DL control channel (PDCCH).

As illustrated in FIG. 6, the end of the control portion 602 may be separated in time from the beginning of the UL data portion 604. This time separation may sometimes be referred to as a gap, guard period, guard interval, and/or various other suitable terms. This separation provides time for the switch-over from DL communication (e.g., reception operation by the scheduling entity) to UL communication (e.g., transmission by the scheduling entity). The UL-centric slot may also include a common UL portion 606. The common UL portion 606 in FIG. 6 may be similar to the common UL portion 506 described above with reference to FIG. 5. The common UL portion 606 may additionally or alternatively include information pertaining to channel quality indicator (CQI), sounding reference signals (SRSs), and various other suitable types of information. One of ordinary skill in the art will understand that the foregoing is merely one example of an UL-centric slot and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

Extended reality (XR) is an umbrella term for applications and services related to virtual reality (VR), augmented reality (AR), and cloud gaming (CG). XR does not fit well into the existing classification of fifth-generation (5G) applications and services, typically divided into enhanced mobile broadband (eMBB), ultra-reliable low latency communications (URLLC), and massive machine-type communications (mMTC). Efficient support for XR services imposes new challenges for existing and future wireless networks.

When a UE establishes a connection supporting an XR application service with a base station (e.g., gNB), the UE may transmit data packets to the base station in periodic traffic. For example, when the UE transmits video data to the base station, the periodic traffic includes groups of I-frames and P-frames. Specifically, each I-frame is a complete video frame with a much larger packet size, which requires more resource for the UE to transmit. On the other hand, each P-frame is a delta frame with a smaller packet size interpolated between two consecutive I-frames, which requires less resource for the UE to transmit. In certain configurations, the ratio of the numbers of I-frames and P-frames is 1:7, and since the data being transmitted may have a variable overall data size and a variable packet size in each frame, the base station may need the information related to the data size from the UE to properly configure the UE with related configuration for the data packet transmission.

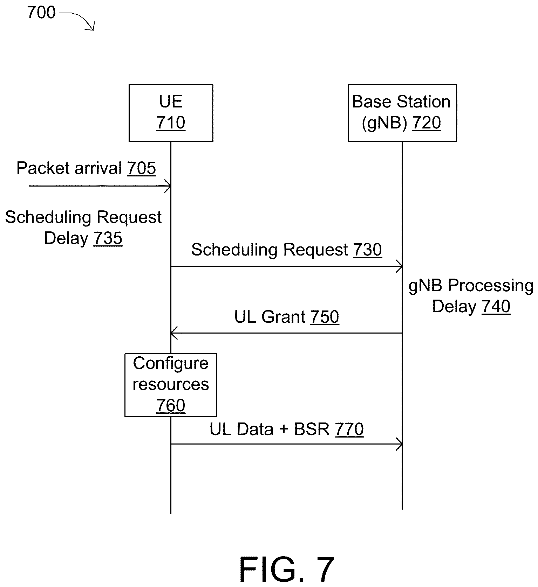

In certain configuration, when the UE has UL data in its modem buffer, the UE may transmit the UL data through a UL dynamic grant (DG) packet transmission process. FIG. 7 is a diagram illustrating an example procedure between a UE and a base station. As shown in FIG. 7, at operation 705, the UE 710 may receive a data packet, *i.e*., the packet arrival. At this time, the UE 710 determines whether the base station 720 (*e.g.*, gNB) has sent a configuration instruction for configuring the UE 710 to provide UL resources. If the UE 710 has no UL resources available, at operation 730, the UE 710 may send a scheduling request (SR) to the base station 720, and in response to the SR, at operation 750, the base station 720 sends a UL grant back to the UE 710 to configure the UE 710 with the UL resources. It should be noted that a SR delay 735 may exist between the operation 705 (packet arrival) and operation 730 (the UE 710 sending SR to the base station 720), and a gNB processing delay 740 may exist between the operation 730 (the UE 710 sending SR to the base station 720) and operation 750 (the base station 720 sending the UL grant back to the UE 710). Once receiving the UL grant, at operation 760, the UE 710 may configure the resources based on the UL grant, such that the UL resources are available. Then, at operation 770, the UE 710 may send the UL data and a buffer status report (BSR) to the base station 720, such that the base station 720 may know the buffer size of the UL data.

BSR is a kind of MAC CE (control element) from the UE 710 to the base station 720 carrying the information on the data size in the UE 710 buffer to be sent out. In other words, the BSR includes the buffer size information of the UE 710. The BSR is generally reported in a Logical Channel Group (LCG) unit. In other words, the smallest granularity for the BSR is LCG. In certain configuration, the buffer size information is in the form of an index, and the base station 720 refers the index in a BSR table to access the buffer size value in bytes.

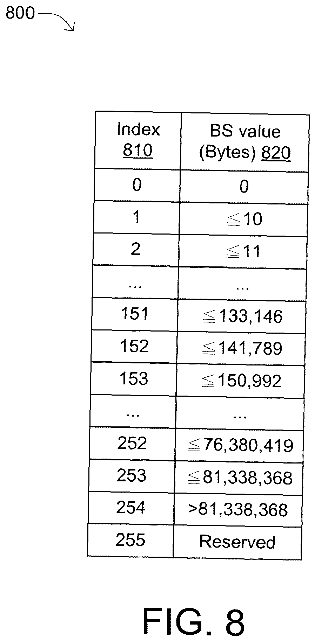

FIG. 8 is a diagram showing a legacy BSR table 800, which includes an index field 810 having index values from 0 to 255, and a buffer size field 820 with the corresponding buffer size values. The BSR table 800 as shown in FIG. 8 is a legacy BSR table. Specifically, for each index value in the index field 810, the corresponding buffer size value in the buffer size field 820 is in the form of a range. For example, if the UE 710 has a buffer size of 140625 bytes, the UE 710 may report the BSR with an index of 152. When the base station 720 receives the BSR, the base station 720 may refers to the index in the BSR table 800 to know that the buffer size value is greater than 133,146 bytes (*i.e*., the BS value related to the index 151) and less than or equal to 141,789 bytes (*i.e*., the BS value related to the index 152). In other words, the base station 720 knows the UE buffer status (*i.e*., the buffer size of the UE 710) in the form of a range of (133146, 141789) bytes. Thus, a quantized error exists between the actual buffer size of the UE 710 and the BS value estimated by the base station 720 based on the BSR index.

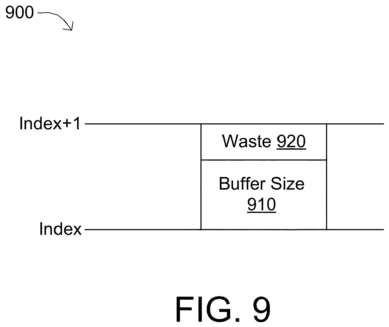

FIG. 9 is a diagram showing a quantized error between the actual buffer size of the UE and the BS value awared by the base station. Specifically, when the UE 710 reports the BSR with an index, the base station 720 refers to the index in the BSR table 800 to determine a range 900 of the BS value between the BS value indicated by the index and the BS value indicated by (index + 1). Since the actual buffer size 910 of the UE 710 may not reach the upper limit of the range 900, i.e., the BS value indicated by (index + 1), there may be a waste portion 920 in the range 900 of the BS value estimated by the base station 720.

In certain configurations, for enhanced mobile broadband (eMBB) traffic (without latency requirement), the base station 720 can schedule the UL traffic in multiple UL transport block (TB) resources gradually with extra latency. Thus, the index reported by the UE 710 becomes smaller, and the quantized error becomes correspondingly smaller. However, for the XR traffic (with the latency requirement), the base station 720 should schedule the UL transmission for the data to be transmitted as soon as possible, and correspondingly, a larger index will be used due to the relatively larger size of the data. Using the BSR table 800 as shown in FIG. 8 as an example, the worst case may happen when the UE 710 has a buffer size greater than 76,380,419 bytes but smaller than or equal to 81,338,368 bytes. In this case, the BSR index is 253, and up to 4,957,949 (= 81,338,368 - 76,380,419) bytes might be wasted, thus resulting in a larger quantized error in the BSR.

In view of the deficiency, one aspect of the present disclosure proposes a scheme of a DSR format, which is an enhanced BSR format with timing information, for the XR services. Specifically, data volume information associated with delay information (*e.g*., remaining time) may be transmitted in a MAC CE (control element), such as the BSR or DSR. In certain configurations, in the DSR format, in addition to the BSR index indicating the buffer size, additional fields may be provided to indicate timing information and other information related to the BSR table. The procedure and the DSR format work for both DG and configured grant (CG) UL transmission cases, no matter the base station 720 (i.e., the gNB) is aware of the XR traffic. In the case where the base station 720 is without XR traffic awareness, the base station 720 only allocates a small UL grant size for the UE 710 to report the BSR. However, as discussed above, the quantized error in the BSR may be larger due to the larger size of the data to be transmitted for the XR traffic. Therefore, the DSR format may be required. On the other hand, in the case where the base station 720 is with XR traffic awareness, the base station 720 may allocate a "suitable" (which may be average or minimum) UL grant size to the UE 710 for the XR data packets. In this case, the quantized error in the BSR may be smaller due to the remaining buffer size already become smaller. Further, the UE 710 may indicate how many "suitable" resources are needed, thus further reducing the latency.

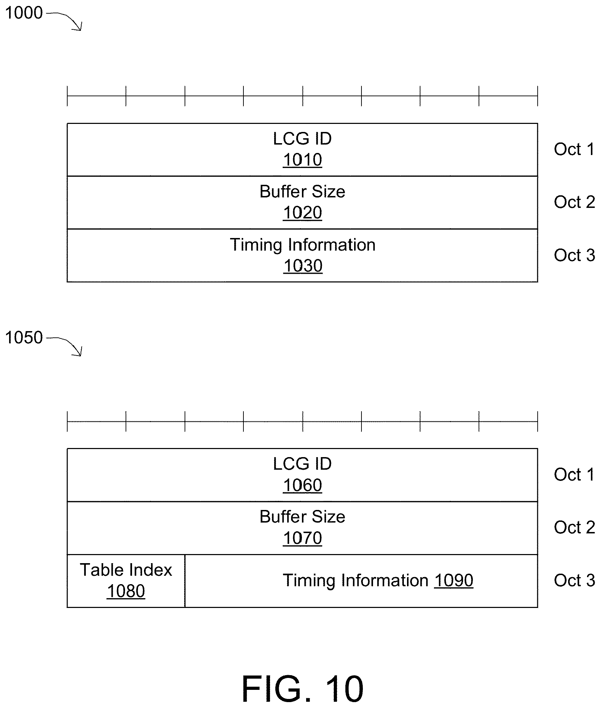

FIG. 10 is a diagram showing example DSR formats with timing information. As shown in FIG. 10, an example DSR 1000 may include three 1-octet fields, including a LCG ID 1010, a buffer size field 1020 indicating the BSR index (which can refer to the index value in the index field 810 as shown in FIG. 8 or any BSR table), and a timing information field 1030 indicating timing information to be reported by the UE 710 to the base station 720. Specifically, the timing information may be any timing information (e.g., a timer) relevant for the base station 720 to determine the configuration for the UE 710. For example, assuming that the base station 720 is aware of the packet delay budget (PDB) information, when the UE 710 receives new data coming to the modem buffer, the UE 710 may report an arrival time (*e.g*., a timestamp) of the new data (e.g., "2023-07-27 21:15:53.75396") as the timing information to the base station 720, such that the base station 720 may configure the UE 710 accordingly. In another example, the UE 710 may send a timestamp referring to a "future BSR" (i.e., with XR traffic prediction or XR traffic awareness) as the timing information to the base station 720. The "future BSR" may be another new trigger condition for the BSR, and the trigger may come from an access point (AP) on which the XR services run. In certain configurations, the timing information may be in the form of an absolute value indicating the absolute time or a system frame number (SFN). Alternatively, in certain configurations, the timing information may be in the form of a relative value based on a reference time, e.g., an offset from the first Physical Uplink Shared Channel (PUSCH), such that the absolute value may be calculated based on the relative value and the reference time. For example, the UE 710 may calculate the remaining time (*i.e*., the relative value) based on the PDCP discard timer value, and the reference time for the remaining time is determined from the point of the first transmission of the information.

In certain configurations, the base station 720 may include multiple BSR tables. In this case, another example DSR 1050 may be provided to include four fields, including a 1-octet LCG ID 1060, a 1-octet buffer size field 1070 indicating the BSR index (which can refer to the index value in the index field 810 as shown in FIG. 8 or any new BSR table), a 2-bit table index field 1080, and a 6-bit timing information field 1090 indicating timing information to be reported by the UE 710 to the base station 720. In other words, in comparison to the DSR 1000, the DSR 1050 removes two bits from the timing information field in order to provide the additional table index field 1080. The table index field 1080 is used to indicate or select, from the BSR tables available at the base station 720, a corresponding BSR table to be used.

In certain embodiment, instead of providing the timing information in the DSR, the DSR format may provide remaining PDB information for the base station 720. For example, when the UE 710 has an original PDB of 30 ms, and the buffer is already in queue for a certain time (*e.g*., 5 ms), the UE 710 may provide the remaining PDB information (*i.e*., 25 ms) to the base station 720 in the DSR format, such that the base station 720 may better handle UL scheduling.

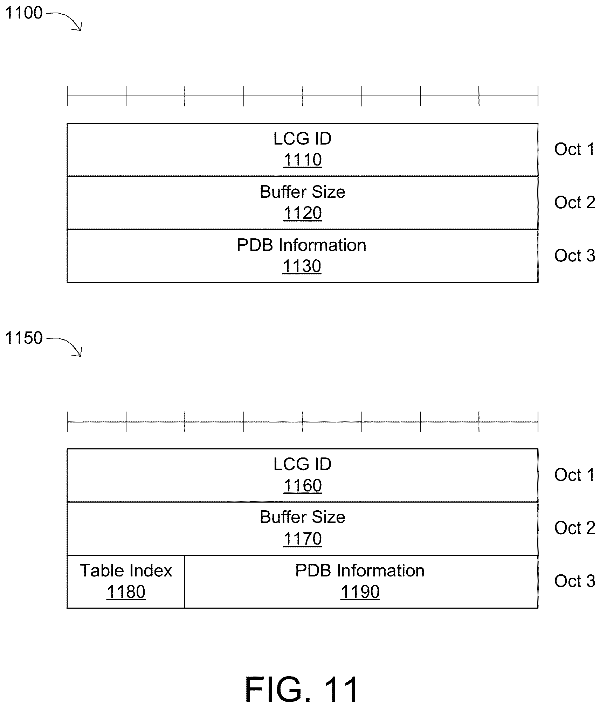

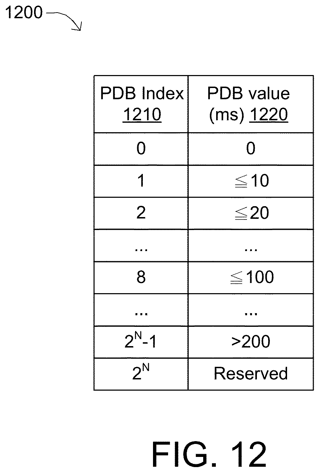

FIG. 11 is a diagram showing an example DSR format with remaining PDB information. As shown in FIG. 11, an example DSR 1100 may include three 1-octet fields, including a LCG ID 1110, a buffer size field 1120 indicating the BSR index (which can refer to the index value in the index field 810 as shown in FIG. 8 or any new BSR table), and a PDB information field 1130 indicating the remaining PDB information to be reported by the UE 710 to the base station 720. In certain configurations, the remaining PDB information in the PDB information field 1130 may be in the form of a PDB index, allowing the base station 720 to refers the PDB index in a PDB table to access the remaining PDB value in time. FIG. 12 is a diagram showing an example PDB table 1200, which includes an index field 1210 having index values from 0 to 2^{N}-1, and a PDB field 1220 with the corresponding PDB values. Similar to the BSR value in the buffer size field 820 as shown in FIG. 8, the PDB value in the PDB field 1220 is also in a range. The concept of the remaining PDB information is similar to a retxBSR timer. However, the retxBSR timer is for the whole MAC entity, not for a specific LCG.

In certain configurations, the base station 720 may include multiple PDB tables. In this case, another example DSR 1150 may be provided to include four fields, including a 1-octet LCG ID 1160, a 1-octet buffer size field 1170 indicating the BSR index (which can refer to the index value in the index field 810 as shown in FIG. 8 or any new BSR table), a 2-bit table index field 1180, and a 6-bit PDB information field 1190 indicating the remaining PDB information to be reported by the UE 710 to the base station 720. In other words, in comparison to the DSR 1100, the DSR 1150 removes two bits from the PDB information field in order to provide the additional table index field 1180. The table index field 1180 is used to indicate or select, from the PDB tables available at the base station 720, a corresponding PDB table to be used.

In the embodiments as discussed, the UE 710 reports the DSR to the base station 720 in a connection supporting the XR application service. In certain configurations, it is possible that the XR traffic is mixed with some other background traffic, and the UE 710 may report the DSR for both XR and background traffic in different LCGs.

In certain configurations, in addition to the fields as shown in FIG. 10 and FIG. 11, the DSR may utilize an index field (e.g., the index field 1080 as shown in FIG. 10) to indicate the DSR (or the enhanced BSR format) being used, allowing each LCG to report the DSR format it uses. In other words, the index field 1080 is used to indicate the DSR format being used. For example, the LCG with XR traffic can use the DSR format with the timing information, with the BSR table index = 1. On the other hand, the LCG with background traffic may use the legacy BSR format, with the BSR table index = 2. In certain configurations, a bitmap mechanism may be used to indicate the DSR format to be used for each LCG.

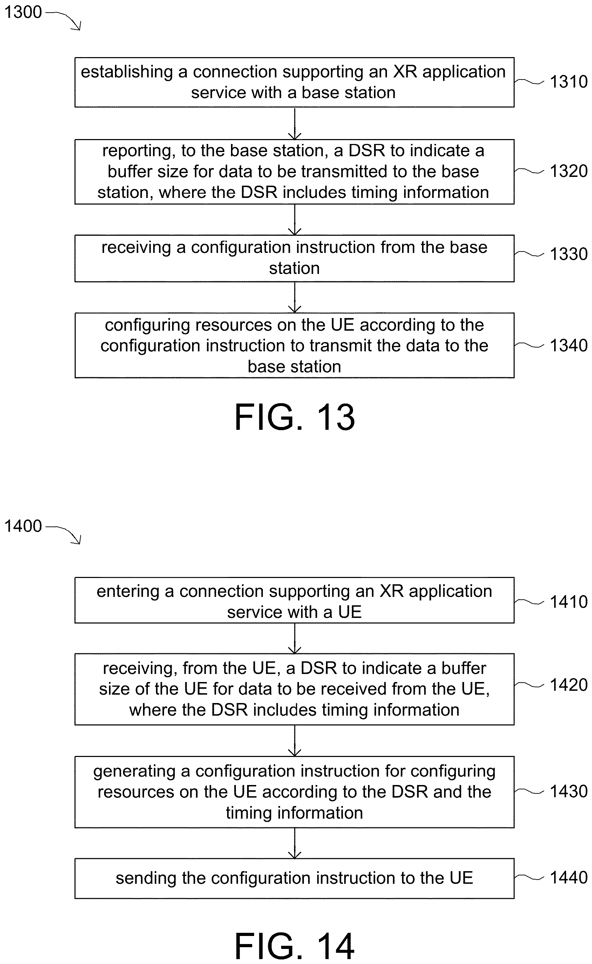

FIG. 13 is a flow chart of a method (process) for wireless communication of a UE. The method may be performed by a UE (e.g., the UE 710). At operation 1310, the UE establishes a connection supporting an XR application service with a base station. At operation 1320, the UE reports, to the base station, a DSR to indicate a buffer size for data to be transmitted to the base station. The DSR includes timing information. At operation 1330, the UE receives a configuration instruction from the base station. At operation 1340, the UE configures resources on the UE according to the configuration instruction to transmit the data to the base station.

FIG. 14 is a flow chart of a method (process) for wireless communication of a base station. The method may be performed by a base station (e.g., the base station 720). At operation 1410, the base station enters a connection supporting an XR application service with a UE. At operation 1420, the base station receives, from the UE, a DSR to indicate a buffer size of the UE for data to be received from the UE. The DSR includes timing information. At operation 1430, the base station generates a configuration instruction for configuring resources on the UE according to the DSR and the timing information. At operation 1440, the base station sends the configuration instruction to the UE.

In certain configurations, the DSR includes a BSR index indicating a corresponding buffer size range in a BSR table.

In certain configurations, the DSR includes a table index selecting a corresponding BSR table from a plurality of BSR tables and a BSR index indicating a corresponding buffer size range in the corresponding BSR table.

In certain configurations, the timing information indicates an arrival time of a new data packet or information related to future BSR. In certain configurations, the timing information is absolute timing information or relative timing information.

In certain configurations, the timing information indicates remaining PDB information. In certain configurations, the remaining PDB information includes a PDB index indicating a corresponding PDB range in a PDB table.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method of wireless communication of a user equipment (UE) (104, 250, 710), comprising:
establishing a connection supporting an extended reality (XR) application service with a base station (102, 180, 210, 720);
reporting, to the base station (102, 180, 210, 720), a delay status report (DSR) (1000, 1050, 1100, 1150) to indicate a buffer size for data to be transmitted to the base station (102, 180, 210, 720), wherein the DSR (1000, 1050, 1100, 1150) includes timing information;
receiving a configuration instruction from the base station (102, 180, 210, 720); and
configuring resources on the UE (104, 250, 710) according to the configuration instruction to transmit the data to the base station (102, 180, 210, 720).

2. The method of claim 1, wherein the DSR (1000, 1050, 1100, 1150) includes a buffer status report (BSR) index indicating a corresponding buffer size range in a BSR table (800).

3. The method of claim 1, wherein the DSR (1000, 1050, 1100, 1150) includes a table index selecting a corresponding BSR table (800) from a plurality of BSR tables (800) and a BSR index indicating a corresponding buffer size range in the corresponding BSR table (800).

4. The method of claim 1, wherein the timing information indicates an arrival time of a new data packet or information related to future BSR.

5. The method of claim 4, wherein the timing information is absolute timing information or relative timing information.

6. The method of claim 1, wherein the timing information indicates remaining packet delay budget (PDB) information, and the remaining PDB information includes a PDB index indicating a corresponding PDB range in a PDB table (1200).

7. A method of wireless communication of a base station (102, 180, 210, 720), comprising:
entering a connection supporting an extended reality (XR) application service with a user equipment (UE) (104, 250, 710);
receiving, from the UE (104, 250, 710), a delay status report (DSR) (1000, 1050, 1100, 1150) to indicate a buffer size of the UE for data to be received from the UE (104, 250, 710), wherein the DSR (1000, 1050, 1100, 1150) includes timing information;
generating a configuration instruction for configuring resources on the UE (104, 250, 710) according to the DSR (1000, 1050, 1100, 1150) and the timing information; and
sending the configuration instruction to the UE (104, 250, 710).

8. The method of claim 7, wherein the DSR (1000, 1050, 1100, 1150) includes a buffer status report (BSR) index indicating a corresponding buffer size range in a BSR table (800).

9. The method of claim 7, wherein the base station (102, 180, 210, 720) stores a plurality of BSR tables (800), and the DSR (1000, 1050, 1100, 1150) includes a table index selecting a corresponding BSR table (800) from the plurality of BSR tables (800) and a BSR index indicating a corresponding buffer size range in the corresponding BSR table (800).

10. The method of claim 7, wherein the timing information indicates an arrival time of a new data packet to the UE (104, 250, 710) or information related to future BSR.

11. The method of claim 10, wherein the timing information is absolute timing information or relative timing information.

12. The method of claim 7, wherein the timing information indicates remaining packet delay budget (PDB) information, and the remaining PDB information includes a PDB index indicating a corresponding PDB range in a PDB table (1200).

13. An apparatus for wireless communication, the apparatus being a user equipment (UE) (104, 250, 710), comprising:
a memory; and
at least one processor coupled to the memory and configured to:
establish a connection supporting an extended reality (XR) application service with a base station (102, 180, 210, 720);
report, to the base station (102, 180, 210, 720), a delay status report (DSR) (1000, 1050, 1100, 1150) to indicate a buffer size for data to be transmitted to the base station (102, 180, 210, 720), wherein the DSR (1000, 1050, 1100, 1150) includes timing information;
receive a configuration instruction from the base station (102, 180, 210, 720); and
configure resources on the UE (104, 250, 710) according to the configuration instruction to transmit the data to the base station (102, 180, 210, 720).

14. The apparatus of claim 13, wherein the DSR (1000, 1050, 1100, 1150) includes a buffer status report (BSR) index indicating a corresponding buffer size range in a BSR table (800), and the timing information indicates an arrival time of a new data packet or information related to future BSR.

15. The apparatus of claim 13, wherein the DSR (1000, 1050, 1100, 1150) includes a table index selecting a corresponding BSR table (800) from a plurality of BSR tables (800) and a BSR index indicating a corresponding buffer size range in the corresponding BSR table (800).
